# FASCICULE DE BREVET EUROPEEN

(11) **EP 2 483 091 B1**
(45) Date de publication et mention de la délivrance du brevet: **30.03.2016**
(21) Numéro de dépôt: 10770742.4
(22) Date de dépôt: 29.09.2010
(51) Int. Cl.: B60H 1/00

(54) **SYSTEME DE CLIMATISATION EQUIPANT UN VEHICULE AUTOMOBILE ET PROCEDE DE MISE EN OEUVRE D'UN TEL SYSTEME SELON DIVERS MODES DE FONCTIONNEMENT**
KLIMATISERUNGSSYSTEM FÜR AUTOMOBILE UND VERFAHREN ZUM BETRIEB EINES DERARTIGEN KLIMATISIERUNGSSYSTEMS IN VERSCHIEDENEN BETRIEBSWEISEN
AIR CONDITIONING SYSTEM FOR AUTOMOTIVE VEHICLES AND METHOD OF OPERATING SUCH AN AIR CONDITIONG SYSTEM IN VARIOUS MODES

(30) Priorité: 30.09.2009 FR 0904654
(43) Date de publication de la demande: 08.08.2012
(73) Titulaire: Valeo Systèmes Thermiques, 78321 Le Mesnil Saint Denis (FR)
(72) Inventeur: THUEZ, Jean-Luc, 781120 Fourqueux (FR)
(74) Mandataire: Vieillevigne, Sébastien Nicolas Bernard
(86) Numéro de dépôt international: PCT/EP2010/064491
(87) Numéro de publication internationale: WO 2011/039275

(56) Documents cités:
- EP-A1- 1 961 592
- WO-A1-03/051657
- US-A1- 2005 133 215

## Description

### Domaine technique de l'invention.

L'invention est du domaine des installations de ventilation, de chauffage et/ou de climatisation d'un véhicule automobile électrique ou hybride. Elle a pour objet un système de climatisation coopérant avec une telle installation. Elle a aussi pour objet un procédé de mise en oeuvre d'un tel système selon divers modes de fonctionnement.

### Etat de la technique.

Un véhicule automobile électrique ou hybride, dont la propulsion est assurée au moins partiellement par un moteur électrique, est couramment équipé d'un système de ventilation, de chauffage et/ou de climatisation pour modifier les paramètres aérothermiques de l'air contenu à l'intérieur de l'habitacle du véhicule. Une telle modification est obtenue à partir de la délivrance d'un flux d'air à l'intérieur de l'habitacle.

Le système de climatisation comprend une installation de ventilation, de chauffage et/ou de climatisation principalement constituée d'un boîtier réalisé en matière plastique et logé sous une planche de bord du véhicule. Le boîtier canalise la circulation du flux d'air préalablement à la délivrance de ce dernier à l'intérieur de l'habitacle. A cet effet, le boîtier est pourvu d'au moins une bouche de dégivrage/désembuage pour délivrer le flux d'air vers un pare-brise et/ou des vitres avant du véhicule en vue de les dégivrer et/ou de les désembuer.

Le système de climatisation comprend également une boucle de climatisation à l'intérieur de laquelle circule un fluide réfrigérant et une boucle secondaire à l'intérieur de laquelle circule un fluide caloporteur. Un premier échangeur de chaleur fluide réfrigérant / fluide caloporteur est constitutif à la fois de la boucle de climatisation et de la boucle secondaire de telle sorte que le fluide réfrigérant et le fluide caloporteur peuvent échanger de la chaleur l'un avec l'autre. On pourra par exemple se reporter au document US 2002/0036080 (ITOH et al) qui décrit un tel système de climatisation.

La boucle de climatisation comprend un compresseur pour comprimer le fluide réfrigérant, une vanne quatre-voies, le premier échangeur de chaleur fluide réfrigérant / fluide caloporteur pour permettre au fluide réfrigérant de se refroidir à pression relativement constante en cédant de la chaleur au fluide caloporteur, au moins un organe de détente pour permettre une détente du fluide réfrigérant, un deuxième échangeur de chaleur fluide réfrigérant / air ambiant pour permettre un échange de chaleur entre le fluide réfrigérant et un air ambiant, tel que l'air extérieur au véhicule. La boucle de climatisation comprend aussi un échangeur thermique disposé à l'intérieur du boîtier pour que le fluide réfrigérant échange de la chaleur avec le flux d'air qui traverse ce dernier et un accumulateur de fluide réfrigérant pour empêcher une admission de fluide réfrigérant à l'état liquide à l'intérieur du compresseur.

La boucle secondaire comprend une pompe pour faire circuler le fluide caloporteur, le premier échangeur de chaleur fluide réfrigérant / fluide caloporteur pour permettre au fluide caloporteur de récupérer de la chaleur en provenance du fluide réfrigérant et un radiateur logé à l'intérieur de l'installation pour que le fluide caloporteur cède de la chaleur au flux d'air. Le radiateur est pourvu de volets pour autoriser ou interdire un passage du flux d'air à travers le radiateur.

Un tel système de climatisation est agencé pour permettre un dégivrage du deuxième échangeur de chaleur fluide réfrigérant / air ambiant.

Un problème posé par l'utilisation du système de climatisation décrit par US 2002/0036080 réside dans le fait que le système de climatisation n'est pas adapté pour fonctionner de manière efficace en mode chauffage et en mode climatisation dans lesquels il est respectivement recherché de réchauffer et de refroidir le flux d'air préalablement à sa délivrance à l'intérieur de l'habitacle. Plus particulièrement, un tel système n'est pas apte à fonctionner de manière efficace alternativement en mode chauffage et en mode climatisation. Plus précisément, un tel système ne permet pas de délivrer le flux d'air sans générer un embuement du pare-brise et/ou des vitres avant du véhicule, par exemple lors du passage d'un mode de fonctionnement du système de climatisation à un autre mode.

WO 03/051657 A1 divulgue un système de climatisation selon le préambule de la revendication 1.

### Objet de l'invention.

Le but de la présente invention est de proposer un système de climatisation destiné à équiper un véhicule automobile électrique ou hybride, un tel système offrant des modes de fonctionnement variés, notamment au moins un mode chauffage et un mode climatisation, un tel système de climatisation étant de surcroît agencé pour permettre un passage d'un mode de fonctionnement à un autre mode sans risque d'embuer un pare-brise et/ou des vitres avant du véhicule. Un autre but de la présente invention est de proposer une méthode de mise en oeuvre d'un tel système de climatisation qui permet un réchauffement d'un flux d'air le plus efficacement possible.

Un système de climatisation de la présente invention est un système de climatisation pour véhicule automobile selon la revendication 1.

Le premier, le deuxième, le troisième et le quatrième canal sont des chemins de circulation du fluide réfrigérant à l'intérieur de la vanne quatre-voies.

Le premier échangeur de chaleur fluide réfrigérant - fluide caloporteur, le premier organe de détente et le deuxième échangeur de chaleur fluide réfrigérant / air ambiant sont directement en série sur la boucle de climatisation, c'est-à-dire sans autre composant intermédiaire en dehors des conduites les reliant. L'entrée du premier dispositif de contournement est donc connectée entre le premier échangeur de chaleur fluide réfrigérant / fluide caloporteur et le premier organe de détente alors que la sortie du premier dispositif de contournement est connectée entre cet organe et le deuxième échangeur de chaleur fluide réfrigérant / air ambiant.

Le premier organe de détente est associé à un premier dispositif de contournement.

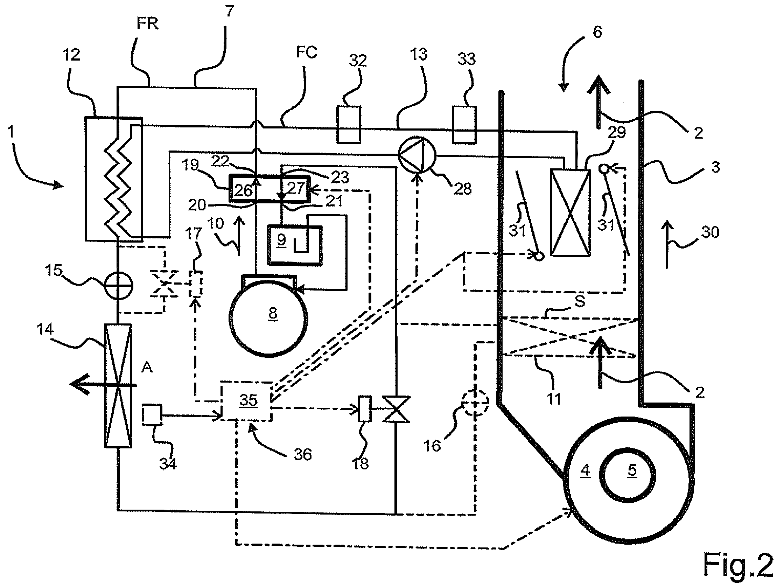

Un deuxième dispositif de contournement est disposé en parallèle du deuxième organe de détente et de l'échangeur thermique, en parallèle de ces deux composants. L'entrée du deuxième dispositif de contournement est donc immédiatement en amont du deuxième organe de détente et la sortie du deuxième dispositif de contournement est directement en aval de la sortie de l'échangeur thermique placé à l'intérieur de l'installation (selon le sens de circulation du fluide réfrigérant sur la figure 2).
Le compresseur est avantageusement disposé sur la boucle de climatisation entre une sortie de fluide réfrigérant FR que comporte la vanne quatre-voies et une entrée de fluide réfrigérant FR que comporte également la vanne quatre-voies.
Le compresseur est de préférence associé à un accumulateur qui est disposé sur la boucle de climatisation entre le compresseur et la sortie de fluide réfrigérant FR.

La boucle secondaire comprend préférentiellement une pompe et un échangeur fluide caloporteur / auxiliaire électrique.
L'auxiliaire électrique est par exemple un moteur électrique et/ou un boîtier électronique de puissance et/ou une batterie.

Le radiateur est avantageusement équipé d'au moins un volet de mixage d'un flux d'air circulant à l'intérieur de ladite installation.

Ledit système comprend avantageusement des moyens de commande de la mise en oeuvre du premier canal, du deuxième canal, du troisième canal, du quatrième canal, du premier dispositif de contournement, du deuxième dispositif de contournement, de la pompe et du volet de mixage.

La mise en oeuvre des moyens de commande est préférentiellement placée sous la dépendance d'une information relative à une différence D prise entre une mesure d'une température Ta de l'air ambiant A et une première température seuil Ts1.

Un procédé de mise en oeuvre d'un tel système de climatisation est principalement reconnaissable en ce que le procédé comporte :
- un premier mode de chauffage du flux d'air qui est opéré lorsque la différence D est négative ou nulle,
- un deuxième mode de chauffage du flux d'air qui est opéré lorsque la différence D est positive.

Plus particulièrement, le premier mode de chauffage consiste à ouvrir le premier canal et le deuxième canal, fermer le troisième canal et le quatrième canal, ouvrir le premier dispositif de contournement, fermer le deuxième dispositif de contournement, mettre le volet de mixage en position de fermeture et arrêter la pompe.

Plus particulièrement, le deuxième mode de chauffage consiste à fermer le premier canal et le deuxième canal, ouvrir le troisième canal et le quatrième canal, fermer le premier dispositif de contournement, ouvrir le deuxième dispositif de contournement, mettre le volet de mixage en position de fermeture et mettre en fonctionnement la pompe.

Plus particulièrement, le procédé comporte un premier mode déshumidification qui consiste à fermer le premier canal et le deuxième canal, ouvrir le troisième canal et le quatrième canal, ouvrir le premier dispositif de contournement, fermer le deuxième dispositif de contournement, mettre le volet de mixage en position d'ouverture et mettre en fonctionnement la pompe.

Plus particulièrement, le procédé comporte un deuxième mode déshumidification qui consiste à fermer le premier canal et le deuxième canal, ouvrir le troisième canal et le quatrième canal, fermer le premier dispositif de contournement, fermer le deuxième dispositif de contournement, mettre le volet de mixage en position d'ouverture et mettre en fonctionnement la pompe.

Plus particulièrement, le procédé comporte un mode climatisation qui consiste à fermer le premier canal et le deuxième canal, ouvrir le troisième canal et le quatrième canal, ouvrir le premier dispositif de contournement, fermer le deuxième dispositif de contournement, mettre le volet de mixage en position de fermeture et arrêter la pompe.

De manière avantageuse, après la mise en oeuvre du système de climatisation en mode climatisation, le procédé comporte un laps de temps T pendant lequel la mise en oeuvre du système de climatisation selon le premier mode chauffage est interdite et pendant lequel la mise en oeuvre du système de climatisation selon le deuxième mode chauffage est autorisée.

### Description des figures.

La présente invention sera mieux comprise à la lecture de la description qui va en être faite d'exemples de réalisation, en relation avec les figures des planches annexées, dans lesquelles :

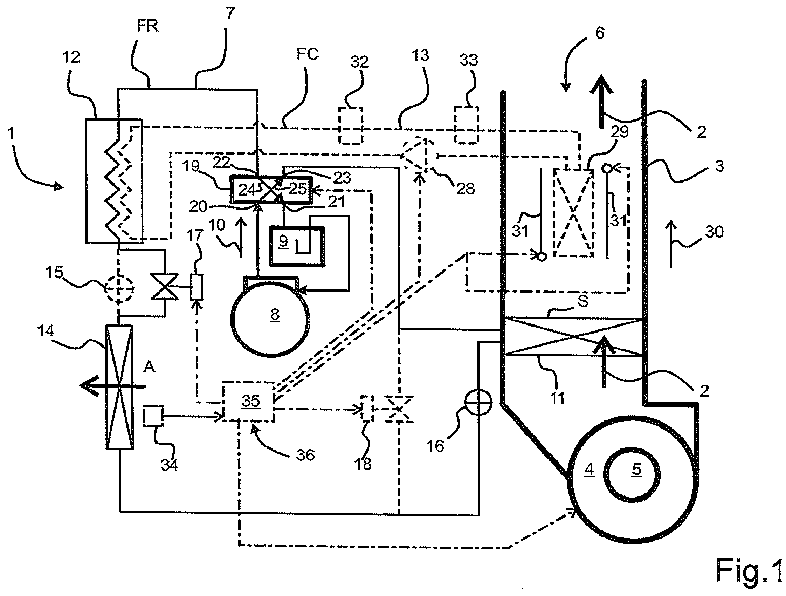

Les fig.1 à fig.5 sont des illustrations schématiques d'un système de climatisation de la présente invention selon des modes respectifs de fonctionnement.

Sur les figures, un véhicule automobile est équipé d'un système de climatisation 1 pour modifier les paramètres aérothermiques de l'air contenu à l'intérieur de l'habitacle du véhicule. Une telle modification est obtenue à partir de la délivrance d'au moins un flux d'air 2 à l'intérieur de l'habitacle. A cet effet, le système de climatisation 1 comprend une installation de ventilation, de chauffage et/ou de climatisation 3 principalement constituée d'un boîtier réalisé en matière plastique. L'installation 3 est logée sous une planche de bord du véhicule et canalise la circulation du flux d'air 2. L'installation 3 loge un pulseur 4 pour faire circuler le flux d'air 2 depuis au moins une bouche d'admission d'air 5 vers au moins une bouche de délivrance d'air 6 que comporte le boîtier. La bouche de délivrance d'air 6 est notamment une bouche de dégivrage/désembuage qui est destinée à délivrer le flux d'air 2 vers le pare-brise et/ou les vitres avant du véhicule.

Le système de climatisation 1 comprend une boucle de climatisation 7 à l'intérieur de laquelle circule un fluide réfrigérant FR, tel que du dioxyde de carbone connu sous l'appellation R744. La boucle de climatisation 7 comprend un compresseur 8 pour comprimer le fluide réfrigérant FR à l'état gazeux, et optionnellement un accumulateur 9 pour empêcher une admission de fluide réfrigérant FR à l'état liquide à l'intérieur du compresseur 8. L'accumulateur 9 est disposé sur la boucle de climatisation 7 en amont du compresseur 8 selon un sens de circulation 10 du fluide réfrigérant FR à l'intérieur du compresseur 8 et de l'accumulateur 9. La boucle de climatisation 7 comprend également un échangeur thermique 11 qui est logé à l'intérieur de l'installation 3. L'échangeur thermique 11 est destiné à modifier la température du flux d'air 2 qui circule à l'intérieur de l'installation 3 et qui traverse l'échangeur thermique 11. La boucle de climatisation 7 comprend aussi un premier échangeur de chaleur fluide réfrigérant / fluide caloporteur 12 pour permettre au fluide réfrigérant FR d'échanger de la chaleur avec un fluide caloporteur FÇ circulant à l'intérieur d'une boucle secondaire 13. La boucle de climatisation 7 comprend enfin une vanne quatre-voies 19 pour configurer la boucle de climatisation 7 en mode chauffage ou en mode climatisation. En mode chauffage, l'échangeur thermique 11 se comporte comme un condenseur et tend à réchauffer le flux d'air 2 qui le traverse. En mode climatisation, l'échangeur thermique 11 se comporte comme un évaporateur et tend à refroidir le flux d'air 2 qui le traverse.

Le système de climatisation 1 comprend également la boucle secondaire 13 à l'intérieur de laquelle circule le fluide caloporteur FC, tel qu'un mélange d'eau et de glycol. La boucle secondaire 13 comprend le premier échangeur de chaleur fluide réfrigérant / fluide caloporteur 12, une pompe 28 et un radiateur 29. Ce dernier est logé à l'intérieur de ladite installation 3 en aval de l'échangeur thermique 11 selon un sens d'écoulement 30 du flux d'air 2 à l'intérieur de l'installation 3.

Au cours d'une journée d'utilisation du véhicule et selon une température Ta d'un air ambiant A, tel que l'air extérieur au véhicule, il est fréquent d'avoir à utiliser le système de climatisation 1 d'abord en mode chauffage, puis en mode climatisation et enfin à nouveau en mode chauffage. En effet, en début de journée, lorsque la température de l'air ambiant A est fraîche, c'est-à-dire inférieure à une première température seuil Ts1, par exemple de l'ordre de 5°C, il est souhaitable de faire fonctionner le système de climatisation 1 en mode chauffage. Puis, la température de l'air ambiant A augmentant jusqu'à excéder une deuxième température seuil Ts2, par exemple de l'ordre de 20°C, il est souhaitable de faire fonctionner le système de climatisation 1 en mode climatisation. Puis, en fin de journée, la température de l'air ambiant A baissant, jusqu'à devenir inférieure à la première température seuil Ts1, il est souhaitable de faire fonctionner le système de climatisation 1 à nouveau en mode chauffage.

En mode climatisation, l'échangeur thermique 11 se comportant comme un évaporateur, une vapeur d'eau portée par le flux d'air 2 tend à se condenser sur une surface externe S de l'échangeur thermique 11. Lors du passage en mode chauffage, l'échangeur thermique 11 se comportant alors comme un condenseur, l'eau condensée sur la surface externe S de l'échangeur thermique 11 se vaporise et tend à se condenser sur le pare-brise et/ou les vitres avant du véhicule. La présente invention remédie à cet inconvénient d'un système de climatisation de l'art antérieur en proposant un système de climatisation 1 agencé de manière à pouvoir réchauffer le flux d'air 2 par l'intermédiaire de l'échangeur thermique 11 et/ou par l'intermédiaire du radiateur 29, puis de refroidir le flux d'air 2 par l'intermédiaire de l'échangeur thermique 11, puis de réchauffer le flux d'air 2 par l'intermédiaire du radiateur 29, puis de réchauffer le flux d'air 2 par l'intermédiaire de l'échangeur thermique 11. Ainsi, lors d'un passage du mode climatisation au mode chauffage, la présente invention propose d'utiliser préférentiellement pendant un laps de temps T, un chauffage du flux d'air 2 par l'intermédiaire du radiateur 29, pour permettre à l'échangeur thermique 11 de s'assécher, c'est-à-dire de céder lentement l'eau condensée sur sa surface externe S au flux d'air 2, puis, le laps de temps T étant écoulé, la présente invention propose de réchauffer le flux d'air 2 par l'intermédiaire de l'échangeur thermique 11, dont la surface externe S est devenue exempte d'eau condensée.

Un tel but est atteint à partir du système de climatisation 1 décrit ci-après.

La boucle de climatisation 7 du système de climatisation 1 comprend un deuxième échangeur de chaleur fluide réfrigérant / air ambiant 14 pour permettre un échange de chaleur entre le fluide réfrigérant **FR** et l'air ambiant A. Le deuxième échangeur de chaleur fluide réfrigérant / air ambiant 14 est placé à l'avant du véhicule pour faciliter un tel échange de chaleur. La boucle de climatisation 7 comprend aussi deux organes de détente 15,16 chacun associé à un dispositif de contournement, ou vanne de contournement, respectif 17,18. Les dispositifs de contournement 17 et 18 sont destinés à autoriser ou interdire une circulation du fluide réfrigérant FR à l'intérieur des organes de détente 15,16 auquel ils sont respectivement affectés. Un premier organe de détente 15, associé à un premier dispositif de contournement 17, est interposé entre le premier échangeur de chaleur fluide réfrigérant / fluide caloporteur 12 et le deuxième échangeur de chaleur fluide réfrigérant / air ambiant 14. Un deuxième organe de détente 16 est interposé entre le deuxième échangeur de chaleur fluide réfrigérant / air ambiant 14 et l'échangeur thermique 11. Un deuxième dispositif de contournement 18 est disposé en parallèle du deuxième organe de détente 16 et de l'échangeur thermique 11.

La vanne quatre-voies 19 comporte une entrée 20 de fluide réfrigérant FR à travers laquelle ce dernier est admis à l'intérieur de la vanne quatre-voies 19 et une sortie 21 de fluide réfrigérant FR à travers laquelle ce dernier est évacué hors de la vanne quatre-voies 19. L'entrée 20 est en relation directe et unique avec le compresseur 8 tandis que la sortie 21 est en relation directe et unique avec l'accumulateur 9. Ainsi, en sortie du compresseur 8, la totalité du fluide réfrigérant FR s'écoule directement et obligatoirement vers l'entrée 20. De même, lors de son évacuation hors de la vanne quatre-voies 19 par l'intermédiaire de la sortie 21, la totalité du fluide réfrigérant FR s'écoule directement et obligatoirement vers l'accumulateur 9.

La vanne quatre-voies 19 comporte également un premier orifice de circulation 22 de fluide réfrigérant FR et un deuxième orifice de circulation 23 de fluide réfrigérant FR. Le premier orifice de circulation 22 de fluide réfrigérant FR est en relation directe et unique avec le premier échangeur de chaleur fluide réfrigérant / fluide caloporteur 12 tandis que le deuxième orifice de circulation 23 de fluide réfrigérant FR est en relation directe et unique avec l'échangeur thermique 11. Ainsi, le fluide réfrigérant FR circule directement et en totalité entre le premier échangeur de chaleur fluide réfrigérant / fluide caloporteur 12 et le premier orifice de circulation 22 de fluide réfrigérant FR. De même, le fluide réfrigérant FR circule directement et en totalité entre l'échangeur thermique 11 et le deuxième orifice de circulation 23 de fluide réfrigérant FR. Autrement dit, il n'existe aucun embranchement ni entre le premier échangeur de chaleur fluide réfrigérant / fluide caloporteur 12 et le premier orifice de circulation 22 de fluide réfrigérant FR, ni entre l'échangeur thermique 11 et le deuxième orifice de circulation 23 de fluide réfrigérant FR.

Plus particulièrement sur la fig.1, la vanne quatre-voies 19 comporte un premier canal 24 pour faire circuler le fluide réfrigérant FR depuis le premier orifice de circulation 22 vers la sortie 21, et comporte aussi un deuxième canal 25 pour faire circuler le fluide réfrigérant FR depuis l'entrée 20 vers le deuxième orifice de circulation 23.

Plus particulièrement sur les fig.2 à fig.5, la vanne quatre-voies 19 comporte un troisième canal 26 pour faire circuler le fluide réfrigérant FR depuis l'entrée 20 vers le premier orifice de circulation 22, et comporte aussi un quatrième canal 27 pour faire circuler le fluide réfrigérant FR depuis le deuxième orifice de circulation 23 vers la sortie 21.

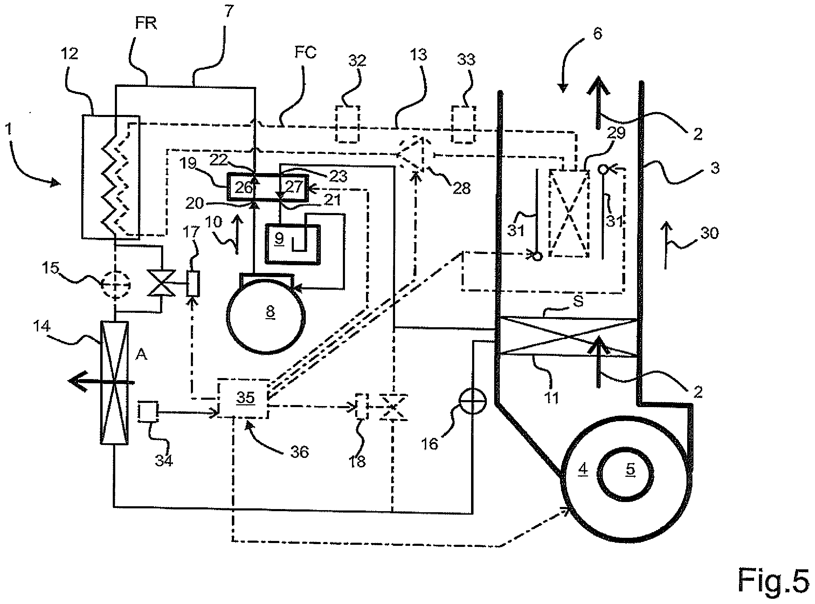

Le radiateur 29 de la boucle secondaire 13 est pourvu d'au moins un volet de mixage d'air 31 qui est manoeuvrable entre une position de fermeture, visible sur les fig.1 et fig.5, dans laquelle le volet de mixage 31 interdit un passage du flux d'air 2 à travers le radiateur 29, et une position d'ouverture, visible sur les fig.2 à fig.4, dans laquelle le volet de mixage 31 autorise un tel passage. La boucle secondaire 13 comprend également au moins un échangeur fluide caloporteur / auxiliaire électrique. La référence 32 montre plus particulièrement un échangeur fluide caloporteur / moteur 32, tel que le moteur du véhicule, électrique ou hybride, apte à permettre le déplacement du véhicule. D'autres auxiliaires électriques sont envisageables tel qu'une batterie ou un boîtier électronique de puissance référencé 33, associé au moteur du véhicule.

Le système de climatisation 1 comprend enfin un capteur de température 34 destiné à mesurer la température Ta de l'air ambiant A pénétrant à travers le deuxième échangeur de chaleur fluide réfrigérant / air ambiant 14. Le capteur 34 est en relation avec des moyens de commande 35 de la mise en oeuvre du pulseur 4, du premier dispositif de contournement 17, du deuxième dispositif de contournement 18, du premier canal 24, du deuxième canal 25, du troisième canal 26, du quatrième canal 27, de la pompe 28 et du volet de mixage 31. Les moyens de commande 35 sont par exemple constitutifs d'une unité de commande électronique du système de climatisation 1. Les moyens de commande 35 sont notamment aptes à comparer la température Ta mesurée de l'air ambiant A avec la première température seuil Ts1 et la deuxième température seuil Ts2. Plus précisément, les moyens de commande 35 sont à même de calculer une différence D prise entre la température Ta mesurée de l'air ambiant A et la première température seuil Ts1. Selon la nature de cette différence D, les moyens de commande 35 mettent ou ne mettent pas en oeuvre les éléments du système de climatisation 1 qui sont placés sous son contrôle. Ainsi, le capteur 34 et les moyens de commande 35 constituent conjointement des moyens de contrôle 36 de la mise en oeuvre du système de climatisation 1, ces moyens de contrôle 36 étant représentés en ligne alternée point-trait sur les figures.

Sur les fig.1 à fig.5 sont représentés en traits pleins les éléments du système de climatisation 1 qui sont mis en oeuvre, c'est-à-dire à l'intérieur desquels le fluide réfrigérant FR circule, tandis que sont représentés en traits pointillés les éléments du système de climatisation 1 qui sont inopérants, c'est-à-dire à l'intérieur desquels le fluide réfrigérant FR ne circule pas.

La fig.1 représente le système de climatisation 1 mis en oeuvre en un premier mode chauffage lorsque la température Ta de l'air ambiant A est inférieure ou égale à la température Ts. Dans ce cas, la différence D = Ta - Ts est négative ou nulle. Dans cette configuration, la présente invention propose de chauffer le flux d'air 2 seulement par l'intermédiaire de l'échangeur thermique 11, le radiateur 29 n'étant pas sollicité pour traiter thermiquement le flux d'air 2. Le premier mode chauffage est un mode chauffage dans lequel le flux d'air 2 est directement réchauffé par un élément de la boucle de climatisation 7, à savoir l'échangeur thermique 11 ; on qualifie ainsi le premier mode de chauffage de mode de chauffage « sur l'air ».

Selon ce premier mode de chauffage, le premier canal 24 et le deuxième canal 25 sont utilisés pour la circulation du fluide réfrigérant FR à l'intérieur de la vanne quatre-voies 19 tandis que le troisième canal 26 et le quatrième canal 27 sont inopérants. Le premier dispositif de contournement 17 est ouvert de telle sorte que le fluide réfrigérant FR contourne le premier organe de détente 15 tandis que le deuxième dispositif de contournement 18 est fermé de telle sorte que le fluide réfrigérant FR circule à travers le deuxième organe de détente 16 et l'échangeur thermique 11. Le volet de mixage 31 est en position de fermeture et la pompe 28 est inopérante de telle sorte que le fluide caloporteur FC ne circule pas à l'intérieur de la boucle secondaire 13. Le pulseur 4 est activé pour faire circuler le flux d'air 2 à l'intérieur de ladite installation 3. A l'intérieur de la boucle de climatisation 7, le fluide réfrigérant FR circule depuis le compresseur 8 vers l'entrée 20, puis à travers le deuxième canal 25 vers le deuxième orifice de circulation 23 pour atteindre l'échangeur thermique 11. Ce dernier se comporte comme un refroidisseur de gaz et réchauffe le flux d'air 2 qui le traverse. Ces dispositions sont telles que la boucle de climatisation 7 est mise à profit pour réchauffer le flux d'air 2 préalablement à sa délivrance à l'intérieur de l'habitacle. Le fluide réfrigérant FR quitte ensuite l'échangeur thermique pour atteindre le deuxième organe de détente 16 où il subit une détente. Le fluide réfrigérant FR s'écoule alors vers le deuxième échangeur de chaleur fluide réfrigérant / air ambiant 14 qui se comporte comme un évaporateur. Le fluide réfrigérant FR rejoint alors le premier dispositif de contournement 17 en contournant le premier organe de détente 15, pour circuler ensuite à travers le premier échangeur de chaleur fluide réfrigérant / fluide caloporteur 12. La pompe 28 étant inopérante, quasiment aucun échange thermique n'est opéré au niveau du premier échangeur de chaleur fluide réfrigérant / fluide caloporteur 12 entre le fluide réfrigérant FR et le fluide caloporteur FC. Puis le fluide réfrigérant FR, circule vers le premier orifice de circulation 22, pour emprunter le premier canal 24 et rejoindre la sortie 21. Finalement, le fluide réfrigérant FR s'écoule à travers l'accumulateur 9 pour retourner ensuite au compresseur 8.

La fig.2 représente le système de climatisation 1 mis en oeuvre en un deuxième mode chauffage lorsque la température Ta est supérieure à la température Ts. Dans ce cas, la différence D = Ta - Ts est positive. Dans cette configuration, la présente invention propose de chauffer le flux d'air 2 seulement par l'intermédiaire du radiateur 29, l'échangeur thermique 11 n'étant pas sollicité pour traiter thermiquement le flux d'air 2. Le deuxième mode chauffage est un mode chauffage dans lequel le flux d'air 2 est directement réchauffé par un élément de la boucle secondaire 13, à savoir le radiateur 29 ; on qualifie ainsi le deuxième mode de chauffage de mode de chauffage « sur l'eau », en référence au fluide caloporteur FC qui est principalement constitué d'eau.

Selon ce deuxième mode de chauffage, le premier canal 24 et le deuxième canal 25 sont inopérants tandis que le troisième canal 26 et le quatrième canal 27 sont utilisés pour la circulation du fluide réfrigérant FR à l'intérieur de la vanne quatre-voies 19. Le premier dispositif de contournement 17 est fermé de telle sorte que le fluide réfrigérant FR circule à l'intérieur du premier organe de détente 15 tandis que le deuxième dispositif de contournement 18 est ouvert de telle sorte que le fluide réfrigérant FR contourne le deuxième organe de détente 16 et l'échangeur thermique 11. Le volet de mixage 31 est en position d'ouverture et la pompe 28 est mise en oeuvre de telle sorte que le fluide caloporteur FC circule à l'intérieur de la boucle secondaire 13. Le pulseur 4 est activé pour faire circuler le flux d'air 2 à l'intérieur de ladite installation 3. A l'intérieur de la boucle de climatisation 7, le fluide réfrigérant FR circule depuis le compresseur 8 vers l'entrée 20, puis à travers le troisième canal 26 vers le premier orifice de circulation 22 pour atteindre le premier échangeur de chaleur fluide réfrigérant / fluide caloporteur 12. Ce dernier se comporte comme un refroidisseur de gaz de manière à réchauffer le fluide caloporteur FC. Ainsi, la boucle secondaire 13 puise de la chaleur auprès de la boucle de climatisation 7 par l'intermédiaire du premier échangeur de chaleur fluide réfrigérant / fluide caloporteur 12, puis cède la chaleur puisée au flux d'air 2 par l'intermédiaire du radiateur 29. De plus, la boucle secondaire 13 est agencée pour récupérer également de la chaleur auprès de l'échangeur fluide caloporteur / moteur 32. Le fluide réfrigérant FR quitte ensuite le premier échangeur de chaleur fluide réfrigérant / fluide caloporteur 12 pour atteindre le premier organe de détente 15 où il subit une détente. Le fluide réfrigérant FR s'écoule alors vers le deuxième échangeur de chaleur fluide réfrigérant / air ambiant 14 qui se comporte comme un évaporateur. Le fluide réfrigérant FR rejoint alors le deuxième dispositif de contournement 18 en contournant le deuxième organe de détente 16 et l'échangeur thermique 11, pour rejoindre ensuite le deuxième orifice de circulation 23, emprunter le quatrième canal 27 pour atteindre la sortie 21. Finalement, le fluide réfrigérant FR s'écoule à travers l'accumulateur 9 pour retourner ensuite au compresseur 8.

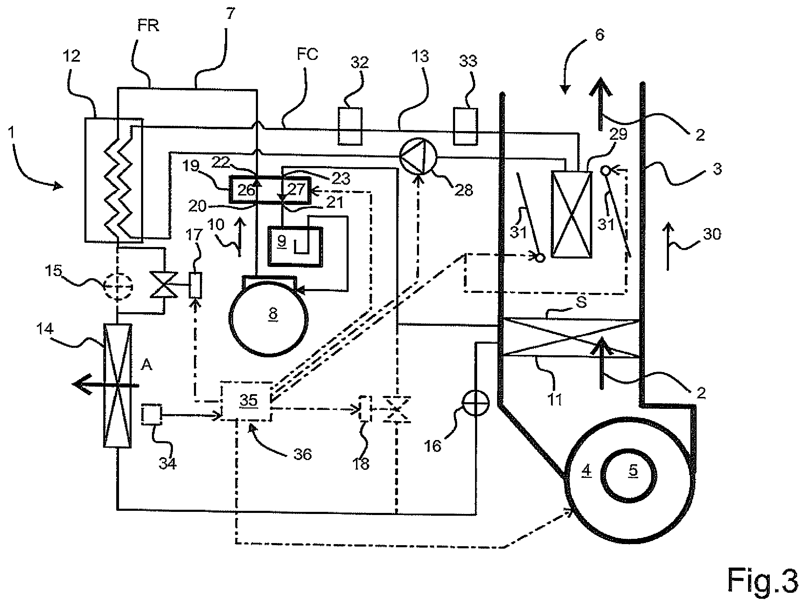

La fig.3 représente le système de climatisation 1 mis en oeuvre selon un premier mode déshumidification. Dans cette configuration, le premier canal 24 et le deuxième canal 25 sont inopérants tandis que le troisième canal 26 et le quatrième canal 27 sont utilisés pour la circulation du fluide réfrigérant FR à l'intérieur de la vanne quatre-voies 19. Le premier dispositif de contournement 17 est ouvert de telle sorte que le fluide réfrigérant FR contourne le premier organe de détente 15 tandis que le deuxième dispositif de contournement 18 est fermé de telle sorte que le fluide réfrigérant FR circule à l'intérieur du deuxième organe de détente 16 et de l'échangeur thermique 11. Le volet de mixage 31 est en position d'ouverture et la pompe 28 est mise en oeuvre de telle sorte que le fluide caloporteur FC circule à l'intérieur de la boucle secondaire 13. Le pulseur 4 est activé pour faire circuler le flux d'air 2 à l'intérieur de ladite installation 3. A l'intérieur de la boucle de climatisation 7, le fluide réfrigérant FR circule depuis le compresseur 8 vers l'entrée 20, puis à travers le troisième canal 26 vers le premier orifice de circulation 22 pour atteindre le premier échangeur de chaleur fluide réfrigérant / fluide caloporteur 12. Ce dernier se comporte comme un refroidisseur de gaz de manière à réchauffer le fluide caloporteur FC. A l'instar de la configuration représentée sur la fig.2, la boucle de climatisation 7 est mise à profit pour réchauffer le flux d'air 2 préalablement à la délivrance de ce dernier à l'intérieur de l'habitacle et la boucle secondaire 13 est mise à contribution de manière à ce que le radiateur 29 réchauffe également le flux d'air 2 en récupérant de la chaleur auprès du premier échangeur de chaleur fluide réfrigérant / fluide caloporteur 12 et de l'échangeur fluide caloporteur / moteur 32. Le fluide réfrigérant FR quitte ensuite le premier échangeur de chaleur fluide réfrigérant / fluide caloporteur 12 pour circuler à travers le premier dispositif de contournement 17 en contournant le premier organe de détente 15. Le fluide réfrigérant FR s'écoule alors vers le deuxième échangeur de chaleur fluide réfrigérant / air ambiant 14 qui se comporte comme un refroidisseur de gaz en réchauffant l'air ambiant A. Le fluide réfrigérant FR rejoint alors le deuxième organe de détente 16 où il subit une détente et l'échangeur thermique 11 qui se comporte comme un évaporateur. Ces dispositions visent à refroidir et déshumidifier le flux d'air 2 par l'intermédiaire de l'échangeur thermique 11 préalablement au réchauffement du flux d'air 2 par le radiateur 29. Puis le fluide réfrigérant FR rejoint le deuxième orifice de circulation 23, emprunte le quatrième canal 27 pour atteindre la sortie 21. Finalement, le fluide réfrigérant FR s'écoule à travers l'accumulateur 9 pour retourner ensuite au compresseur 8.

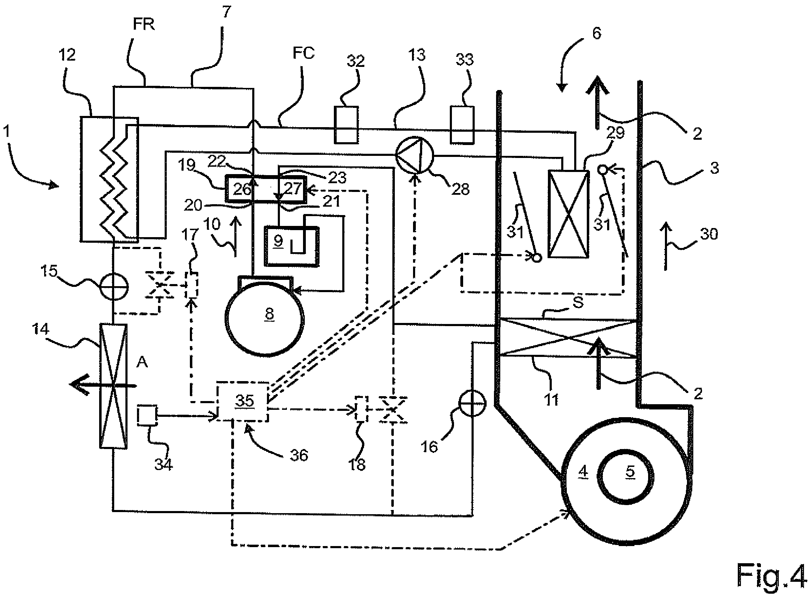

La fig.4 représente le système 1 mis en oeuvre en un deuxième mode déshumidification. Dans cette configuration, le premier canal 24 et le deuxième canal 25 sont inopérants tandis que le troisième canal 26 et le quatrième canal 27 sont utilisés pour la circulation du fluide réfrigérant FR à l'intérieur de la vanne quatre-voies 19. Le premier dispositif de contournement 17 est fermé de telle sorte que le fluide réfrigérant FR circule à l'intérieur du premier organe de détente 15 et le deuxième dispositif de contournement 18 est également fermé de telle sorte que le fluide réfrigérant FR circule à l'intérieur du deuxième organe de détente 16 et de l'échangeur thermique 11. Le volet de mixage 31 est en position d'ouverture et la pompe 28 est mise en oeuvre de telle sorte que le fluide caloporteur FC circule à l'intérieur de la boucle secondaire 13. Le pulseur 4 est activé pour faire circuler le flux d'air 2 à l'intérieur de ladite installation 3. A l'intérieur de la boucle de climatisation 7, le fluide réfrigérant FR circule depuis le compresseur 8 vers l'entrée 20, puis à travers le troisième canal 26 vers le premier orifice de circulation 22 pour atteindre le premier échangeur de chaleur fluide réfrigérant / fluide caloporteur 12. Ce dernier se comporte comme un refroidisseur de gaz de manière à réchauffer le fluide caloporteur FC. A l'instar des configurations représentées sur les fig.2 et fig.3, la boucle de climatisation 7 est mise à profit pour réchauffer le flux d'air 2 préalablement à sa délivrance à l'intérieur de l'habitacle et la boucle secondaire 13 est mise à contribution de manière à ce que le radiateur 29 réchauffe également le flux d'air 2 en récupérant de la chaleur auprès de l'échangeur fluide caloporteur / moteur 32 et du premier échangeur de chaleur fluide réfrigérant / fluide caloporteur 12. Le fluide réfrigérant FR quitte ensuite le premier échangeur de chaleur fluide réfrigérant / fluide caloporteur 12 pour circuler à travers le premier organe de détente 15 où il subit une première détente. Le fluide réfrigérant FR s'écoule alors vers le deuxième échangeur de chaleur fluide réfrigérant / air ambiant 14 qui se comporte comme un évaporateur en refroidissant l'air ambiant A. Le fluide réfrigérant FR rejoint alors le deuxième organe de détente 16 où il subit une deuxième détente, puis rejoint l'échangeur thermique 11 qui se comporte comme un évaporateur. Il est ainsi possible de réguler l'une par rapport à l'autre la première détente et la deuxième détente. Ces dispositions visent à refroidir et déshumidifier le flux d'air 2 par l'intermédiaire de l'échangeur thermique 11 préalablement au réchauffement du flux d'air 2 par le radiateur 29. Puis, le fluide réfrigérant FR rejoint le deuxième orifice de circulation 23, emprunte le quatrième canal 27 pour atteindre la sortie 21. Finalement, le fluide réfrigérant FR s'écoule à travers l'accumulateur 9 pour retourner ensuite au compresseur 8.

La fig.5 représente le système de climatisation 1 mis en oeuvre en un mode climatisation. Dans cette configuration, le premier canal 24 et le deuxième canal 25 sont inopérants tandis que le troisième canal 26 et le quatrième canal 27 sont utilisés pour la circulation du fluide réfrigérant FR à l'intérieur de la vanne quatre-voies 19. Le premier dispositif de contournement 17 est ouvert de telle sorte que le fluide réfrigérant FR contourne le premier organe de détente 15 et le deuxième dispositif de contournement est fermé de telle sorte que le fluide réfrigérant FR circule à l'intérieur du deuxième organe de détente 16 et de l'échangeur thermique 11. Le volet de mixage 31 est en position de fermeture et la pompe 28 est inopérante de telle sorte que le fluide caloporteur FC ne circule pas à l'intérieur de la boucle secondaire 13. Le pulseur 4 est activé pour faire circuler le flux d'air 2 à l'intérieur de ladite installation 3. A l'intérieur de la boucle de climatisation 7, le fluide réfrigérant FR circule depuis le compresseur 8 vers l'entrée 20, puis à travers le troisième canal 26 vers le premier orifice de circulation 22 pour atteindre le premier échangeur de chaleur fluide réfrigérant / fluide caloporteur 12. Ce dernier est quasiment inopérant en raison de la mise à l'arrêt de la pompe 28. Le fluide réfrigérant FR quitte ensuite le premier échangeur de chaleur fluide réfrigérant / fluide caloporteur 12 pour circuler à travers le premier dispositif de contournement 17 en contournant le premier organe de détente 15. Le fluide réfrigérant FR s'écoule alors vers le deuxième échangeur de chaleur fluide réfrigérant / air ambiant 14 qui se comporte comme un refroidisseur de gaz en réchauffant l'air ambiant A. Le fluide réfrigérant FR rejoint alors le deuxième organe de détente 16 où il subit une détente et l'échangeur thermique 11 qui se comporte comme un évaporateur. Ces dispositions visent à refroidir le flux d'air 2 par l'intermédiaire de l'échangeur thermique 11. Puis, le fluide réfrigérant FR rejoint le deuxième orifice de circulation 23, emprunte le quatrième canal 27 pour atteindre la sortie 21. Finalement, le fluide réfrigérant FR s'écoule à travers l'accumulateur 9 pour retourner ensuite au compresseur 8.

L'ensemble de ces dispositions est tel que le système de climatisation 1 de la présente invention est apte à fonctionner en mode chauffage, en mode déshumidification et en mode climatisation de la manière la plus satisfaisante possible, notamment en discernant le premier mode chauffage et le deuxième mode chauffage selon la nature de la température Ta de l'air ambiant A par rapport à la première température seuil Ts1.

L'ensemble de ces dispositions est également tel qu'il possible, après une mise en oeuvre du système de climatisation 1 en mode climatisation, d'interdire une mise en oeuvre du système de climatisation en premier mode de chauffage « sur l'air » pour privilégier le deuxième mode de chauffage « sur l'eau ». Ces dispositions visent à empêcher pendant le laps de temps T, par exemple compris entre 15 min et 45 min, préférentiellement de l'ordre de 30 min, d'empêcher la formation de buée sur le pare-brise et/ou les vitres avant du véhicule.

## Revendications

1. Système de climatisation (1) pour véhicule automobile comprenant une installation de ventilation, de chauffage et/ou de climatisation (3) canalisant la circulation d'un flux d'air (2), une boucle de climatisation (7) à l'intérieur de laquelle circule un fluide réfrigérant FR et une boucle secondaire (13) à l'intérieur de laquelle circule un fluide caloporteur FC,
la boucle secondaire (13) et la boucle de climatisation (7) comprenant conjointement un premier échangeur de chaleur fluide réfrigérant / fluide caloporteur (12),
la boucle secondaire (13) comprenant un radiateur (29) placé à l'intérieur de ladite installation (3), la boucle de climatisation (7) comprenant au moins un organe de détente (15,16), un compresseur (8), une vanne quatre-voies (19), un deuxième échangeur de chaleur fluide réfrigérant / air ambiant (14) et un échangeur thermique (11) placé à l'intérieur de ladite installation (3),
la vanne quatre-voies (19) comprenant un premier canal (24) pour faire circuler le fluide réfrigérant FR depuis le premier échangeur de chaleur fluide réfrigérant / fluide caloporteur (12) vers le compresseur (8), un deuxième canal (25) pour faire circuler le fluide réfrigérant FR depuis le compresseur (8) vers l'échangeur thermique (11) en un premier mode chauffage du flux d'air (2),
un troisième canal (26) pour faire circuler le fluide réfrigérant FR depuis le compresseur (8) vers le premier échangeur de chaleur fluide réfrigérant / fluide caloporteur (12), et un quatrième canal (27) pour faire circuler le fluide réfrigérant FR depuis le deuxième échangeur de chaleur fluide réfrigérant / air ambiant (14) vers le compresseur (8), en un deuxième mode de chauffage du flux d'air (2), un premier organe de détente (15) étant interposé entre le premier échangeur de chaleur fluide réfrigérant / fluide caloporteur (12) et le deuxième échangeur de chaleur fluide réfrigérant / air ambiant (14),
un deuxième organe de détente (16) étant interposé entre le deuxième échangeur de chaleur fluide réfrigérant / air ambiant (14) et l'échangeur thermique (11),
**caractérisé par** un premier dispositif de contournement (17) associé audit premier organe de détente (15), et un deuxième dispositif de contournement (18) disposé en parallèle du deuxième organe de détente (16) et de l'échangeur thermique (11).

2. Système de climatisation (1) selon la revendication 1, dans lequel le premier échangeur de chaleur fluide réfrigérant - fluide caloporteur (12), le premier organe de détente (15) et le deuxième échangeur de chaleur fluide réfrigérant / air ambiant (14) sont directement en série sur la boucle de climatisation (7).

3. Système de climatisation (1) selon l'une quelconque des revendications précédentes, **caractérisé en ce que** le compresseur (8) est disposé sur la boucle de climatisation (7) entre une sortie (21) de fluide réfrigérant FR que comporte la vanne quatre-voies (19) et une entrée (20) de fluide réfrigérant FR que comporte également la vanne quatre-voies (19).

4. Système de climatisation (1) selon l'une quelconque des revendications précédentes, **caractérisé en ce que** la boucle secondaire (13) comprend une pompe (28) et un échangeur fluide caloporteur / auxiliaire électrique (32).

5. Système de climatisation (1) selon la revendication 4, **caractérisé en ce que** l'auxiliaire électrique est un moteur électrique et/ou un boîtier électronique de puissance (33) et/ou une batterie.

6. Système de climatisation (1) selon les revendications 1, 2, et 4, **caractérisé en ce que** ledit système (1) comprend des moyens de commande (35) de la mise en oeuvre du premier canal (24), du deuxième canal (25), du troisième canal (26), du quatrième canal (27), du premier dispositif de contournement (17), du deuxième dispositif de contournement (18), de la pompe (28) et d'un volet de mixage (31).

7. Système de climatisation (1) selon la revendication 6, **caractérisé en ce que** la mise en oeuvre des moyens de commande (35) est placée sous la dépendance d'une information relative à une différence D prise entre une mesure d'une température Ta de l'air ambiant A et une première température seuil Ts1.

8. Procédé de mise en oeuvre d'un système de climatisation (1) selon la revendication 7, **caractérisé en ce que** le procédé comporte :
- un premier mode de chauffage du flux d'air (2) qui est opéré par l'échangeur thermique (11) de la boucle de climatisation lorsque la différence D est négative ou nulle,
- un deuxième mode de chauffage du flux d'air (2) qui est opéré par le radiateur (29) de la boucle secondaire lorsque la différence D est positive,
le premier mode de chauffage consistant à ouvrir le premier canal (24) et le deuxième canal (25), fermer le troisième canal (26) et le quatrième canal (27), ouvrir le premier dispositif de contournement (17), fermer le deuxième dispositif de contournement (18) et arrêter la pompe (28).

9. Procédé selon la revendication 8, **caractérisé en ce que** le deuxième mode de chauffage consiste à fermer le premier canal (24) et le deuxième canal (25), ouvrir le troisième canal (26) et le quatrième canal (27), fermer le premier dispositif de contournement (17), ouvrir le deuxième dispositif de contournement (18),et mettre en fonctionnement la pompe (28).

10. Procédé selon la revendication 8, **caractérisé en ce que** le procédé comporte un premier mode déshumidification qui consiste à fermer le premier canal (24) et le deuxième canal (25), ouvrir le troisième canal (26) et le quatrième canal (27), ouvrir le premier dispositif de contournement (17), fermer le deuxième dispositif de contournement (18) et mettre en fonctionnement la pompe (28).

11. Procédé selon la revendication 8, **caractérisé en ce que** le procédé comporte un deuxième mode déshumidification qui consiste à fermer le premier canal (24) et le deuxième canal (25), ouvrir le troisième canal (26) et le quatrième canal (27), fermer le premier dispositif de contournement (17), fermer le deuxième dispositif de contournement (18) et mettre en fonctionnement la pompe (28).

12. Procédé selon la revendication 8, **caractérisé en ce que** le procédé comporte un mode climatisation qui consiste à fermer le premier canal (24) et le deuxième canal (25), ouvrir le troisième canal (26) et le quatrième canal (27), ouvrir le premier dispositif de contournement (17), fermer le deuxième dispositif de contournement (18), mettre le volet de mixage (31) en position de fermeture et arrêter la pompe (28).

13. Procédé selon la revendication précédente, **caractérisé en ce qu'**après la mise en oeuvre du système de climatisation (1) en mode climatisation, le procédé comporte un laps de temps T pendant lequel la mise en oeuvre du système de climatisation (1) selon le premier mode chauffage est interdite et pendant lequel la mise en oeuvre du système de climatisation (1) selon le deuxième mode chauffage est autorisée.

## Patentansprüche

1. Klimaanlage (1) für ein Kraftfahrzeug, die eine Lüftungs-, Heizungs- und/oder Klimaanlage (3), die die Zirkulation eines Luftstroms (2) kanalisiert, einen Klimatisierungskreis (7), in dessen Innerem ein Kühlfluid FR fließt, und einen Sekundärkreis (13) enthält, in dessen Innerem ein Wärmeträgerfluid FC fließt,
wobei der Sekundärkreis (13) und der Klimatisierungskreis (7) zusammen einen ersten Kühlfluid/Wärmeträgerfluid-Wärmetauscher (12) enthalten,
wobei der Sekundärkreis (13) einen im Inneren der Anlage (3) angeordneten Radiator (29) enthält, wobei der Klimatisierungskreis (7) mindestens ein Expansionsorgan (15, 16), einen Kompressor (8), ein Vierwegeventil (19), einen zweiten Kühlfluid/Umgebungsluft-Wärmetauscher (14) und einen im Inneren der Anlage (3) angeordneten Wärmetauscher (11) enthält,
wobei das Vierwegeventil (19)
einen ersten Kanal (24), um das Kühlfluid FR vom ersten Kühlfluid/Wärmeträgerfluid-Wärmetauscher (12) zum Kompressor (8) fließen zu lassen,
einen zweiten Kanal (25), um das Kühlfluid FR vom Kompressor (8) zum Wärmetauscher (11) in einer ersten Heizbetriebsart des Luftstroms (2) fließen zu lassen,
einen dritten Kanal (26), um das Kühlfluid FR vom Kompressor (8) zum ersten Kühlfluid/Wärmeträgerfluid-Wärmetauscher (12) fließen zu lassen, und
einen vierten Kanal (27) enthält, um das Kühlfluid FR vom zweiten Kühlfluid/Umgebungsluft-Wärmetauscher (14) zum Kompressor (8) in einer zweiten Heizbetriebsart des Luftstroms (2) fließen zu lassen,
wobei ein erstes Expansionsorgan (15) zwischen den ersten Kühlfluid/Wärmeträgerfluid-Wärmetauscher (12) und den zweiten Kühlfluid/Umgebungsluft-Wärmetauscher (14) eingefügt ist,
wobei ein zweites Expansionsorgan (16) zwischen den zweiten Kühlfluid/Umgebungsluft-Wärmetauscher (14) und den Wärmetauscher (11) eingefügt ist, **gekennzeichnet durch** eine erste Umgehungsvorrichtung (17), die dem ersten Expansionsorgan (15) zugeordnet ist, und eine zweite Umgehungsvorrichtung (18), die parallel zum zweiten Expansionsorgan (16) und zum Wärmetauscher (11) angeordnet ist.

2. Klimaanlage (1) nach Anspruch 1, wobei der erste Kühlfluid/Wärmeträgerfluid-Wärmetauscher (12), das erste Expansionsorgan (15) und der zweite Kühlfluid/Umgebungsluft-Wärmetauscher (14) auf dem Klimatisierungskreis (7) direkt in Reihe geschaltet sind.

3. Klimaanlage (1) nach einem der vorhergehenden Ansprüche, **dadurch gekennzeichnet, dass** der Kompressor (8) auf dem Klimatisierungskreis (7) zwischen einem Ausgang (21) von Kühlfluid FR, den das Vierwegeventil (19) aufweist, und einem Eingang (20) von Kühlfluid FR angeordnet ist, den das Vierwegeventil (19) ebenfalls aufweist.

4. Klimaanlage (1) nach einem der vorhergehenden Ansprüche, **dadurch gekennzeichnet, dass** der Sekundärkreis (13) eine Pumpe (28) und einen Wärmeträgerfluid/elektrisches Nebenaggregat-Tauscher (32) enthält.

5. Klimaanlage (1) nach Anspruch 4, **dadurch gekennzeichnet, dass** das elektrische Nebenaggregat ein Elektromotor und/oder ein elektronisches Leistungsgehäuse (33) und/oder eine Batterie ist.

6. Klimaanlage (1) nach den Ansprüchen 1, 2 und 4, **dadurch gekennzeichnet, dass** die Anlage (1) Steuereinrichtungen (35) der Inbetriebnahme des ersten Kanals (24), des zweiten Kanals (25), des dritten Kanals (26), des vierten Kanals (27), der ersten Umgehungsvorrichtung (17), der zweiten Umgehungsvorrichtung (18), der Pumpe (28) und einer Mischklappe (31) enthält.

7. Klimaanlage (1) nach Anspruch 6, **dadurch gekennzeichnet, dass** die Inbetriebnahme der Steuereinrichtungen (35) von einer Information bezüglich einer Differenz D abhängt, die zwischen einer Messung einer Temperatur Ta der Umgebungsluft A und einer ersten Schwellentemperatur Ts1 genommen wird.

8. Verfahren zur Inbetriebnahme einer Klimaanlage (1) nach Anspruch 7, **dadurch gekennzeichnet, dass** das Verfahren aufweist:
- eine erste Heizbetriebsart des Luftstroms (2), die vom Wärmetauscher (11) des Klimatisierungskreises durchgeführt wird, wenn die Differenz D negativ oder Null ist,
- eine zweite Heizbetriebsart des Luftstroms (2), die vom Radiator (29) des Sekundärkreises durchgeführt wird, wenn die Differenz D positiv ist,
wobei die erste Heizbetriebsart darin besteht, den ersten Kanal (24) und den zweiten Kanal (25) zu öffnen, den dritten Kanal (26) und den vierten Kanal (27) zu schließen, die erste Umgehungsvorrichtung (17) zu öffnen, die zweite Umgehungsvorrichtung (18) zu schließen und die Pumpe (28) anzuhalten.

9. Verfahren nach Anspruch 8, **dadurch gekennzeichnet, dass** die zweite Heizbetriebsart darin besteht, den ersten Kanal (24) und den zweiten Kanal (25) zu schließen, den dritten Kanal (26) und den vierten Kanal (27) zu öffnen, die erste Umgehungsvorrichtung (17) zu schließen, die zweite Umgehungsvorrichtung (18) zu öffnen und die Pumpe (28) in Betrieb zu setzen.

10. Verfahren nach Anspruch 8, **dadurch gekennzeichnet, dass** das Verfahren eine erste Entfeuchtungsbetriebsart aufweist, die darin besteht, den ersten Kanal (24) und den zweiten Kanal (25) zu schließen, den dritten Kanal (26) und den vierten Kanal (27) zu öffnen, die erste Umgehungsvorrichtung (17) zu öffnen, die zweite Umgehungsvorrichtung (18) zu schließen und die Pumpe (28) in Betrieb zu setzen.

11. Verfahren nach Anspruch 8, **dadurch gekennzeichnet, dass** das Verfahren eine zweite Entfeuchtungsbetriebsart aufweist, die darin besteht, den ersten Kanal (24) und den zweiten Kanal (25) zu schließen, den dritten Kanal (26) und den vierten Kanal (27) zu öffnen, die erste Umgehungsvorrichtung (17) zu schließen, die zweite Umgehungsvorrichtung (18) zu schließen und die Pumpe (28) in Betrieb zu setzen.

12. Verfahren nach Anspruch 8, **dadurch gekennzeichnet, dass** das Verfahren eine Klimatisierungsbetriebsart aufweist, die darin besteht, den ersten Kanal (24) und den zweiten Kanal (25) zu schließen, den dritten Kanal (26) und den vierten Kanal (27) zu öffnen, die erste Umgehungsvorrichtung (17) zu öffnen, die zweite Umgehungsvorrichtung (18) zu schließen, die Mischklappe (31) in die Schließstellung zu bringen und die Pumpe (28) anzuhalten.

13. Verfahren nach dem vorhergehenden Anspruch, **dadurch gekennzeichnet, dass** nach der Inbetriebnahme der Klimaanlage (1) in der Klimatisierungsbetriebsart das Verfahren eine Zeitspanne T aufweist, während der die Inbetriebnahme der Klimaanlage (1) gemäß der ersten Heizbetriebsart verboten und die Inbetriebnahme der Klimaanlage (1) gemäß der zweiten Heizbetriebsart erlaubt ist.

## Claims

1. Air conditioning system (1) for a motor vehicle comprising a heating, ventilation and/or air conditioning installation (3) routing the circulation of an air flow (2), an air conditioning circuit (7) inside which a refrigerant (FR) circulates and a secondary circuit (13) inside which a coolant (FC) circulates, the secondary circuit (13) and the air conditioning circuit (7) jointly comprising a first refrigerant/coolant heat exchanger (12), the secondary circuit (13) comprising a radiator (29) placed inside said installation (3), the air conditioning circuit (7) comprising at least one expansion member (15, 16), a compressor (8), a four-way valve (19), a second refrigerant/ambient air heat exchanger (14) and a heat exchanger (11) placed inside said installation (3),
the four-way valve (19) comprising a first duct (24) for circulating the refrigerant (FR) from the first refrigerant/coolant heat exchanger (12) to the compressor (8), a second duct (25) for circulating the refrigerant (FR) from the compressor (8) to the heat exchanger (11) in a first mode of heating the air flow (2),
a third duct (26) for circulating the refrigerant (FR) from the compressor (8) to the first refrigerant/coolant heat exchanger (12), and a fourth duct (27) for circulating the refrigerant (FR) from the second refrigerant/ambient air heat exchanger (14) to the compressor (8), in a second mode of heating the air flow (2), a first expansion member (15) being interposed between the first refrigerant/coolant heat exchanger (12) and the second refrigerant/ambient air heat exchanger (14),
a second expansion member (16) being interposed between the second refrigerant/ambient air heat exchanger (14) and the heat exchanger (11), **characterized by** a first bypass device (17) associated with the said first expansion member (15) and a second expansion device (18) arranged in parallel with the second expansion device (16) and the heat exchanger (11).

2. Air conditioning system (1) according to Claim 1, in which the first refrigerant/coolant heat exchanger (12), the first expansion member (15) and the second refrigerant/ambient air heat exchanger (14) are directly in series in the air conditioning circuit (7).

3. Air conditioning system (1) according to either one of the preceding claims, **characterized in that** the compressor (8) is positioned in the air conditioning circuit (7) between an outlet (21) for refrigerant (FR) at the four-way valve (19) comprises and an inlet (20) for refrigerant (FR) that the four-way valve (19) also comprises.

4. Air conditioning system (1) according to any one of the preceding claims, **characterized in that** the secondary circuit (13) comprises a pump (28) and a coolant/electrical auxiliary heat exchanger (32).

5. Air conditioning system (1) according to Claim 4, **characterized in that** the electrical auxiliary is an electric motor and/or a power electronics unit (33) and/or a battery.

6. Air conditioning system (1) according to Claims 1, 2 and 4, **characterized in that** the said system (1) comprises control means (35) controlling use of the first duct (24), of the second duct (25), of the third duct (26), of the fourth duct (27), of the first bypass device (17), of the second bypass device (18), of the pump (28) and of a mixing flap (31) .

7. Air conditioning system (1) according to Claim 6, **characterized in that** use of the control means (35) is placed under dependency of information pertaining to a difference D between a measurement of a temperature Ta of the ambient air A and a first threshold temperature Ts1.

8. Method for operating an air conditioning system (1) according to Claim 7, **characterized in that** the method comprises:
- a first mode of heating the air flow (2) which is performed by the heat exchanger (11) of the air conditioning circuit when the difference D is negative or zero,
- a second mode of heating the air flow (2) which is performed by the radiator (29) of the secondary circuit when the difference D is positive,
the first heating mode consisting in opening the first duct (24) and the second duct (25), closing the third duct (26) and the fourth duct (27), opening the first bypass device (17), closing the second bypass device (18) and switching off the pump (28).

9. Method according to Claim 8, **characterized in that** the second heating mode consists in closing the first duct (24) and the second duct (25), opening the third duct (26) and the fourth duct (27), closing the first bypass device (17), opening the second bypass device (18) and switching on the pump (28).

10. Method according to Claim 8, **characterized in that** the method comprises a first dehumidifying mode which consists in closing the first duct (24) and the second duct (25), opening the third duct (26) and the fourth duct (27), opening the first bypass device (17), closing the second bypass device (18) and switching on the pump (28).

11. Method according to Claim 8, **characterized in that** the method comprises a second dehumidifying mode which consists in closing the first duct (24) and the second duct (25), opening the third duct (26) and the fourth duct (27), closing the first bypass device (17), closing the second bypass device (18) and switching on the pump (28).

12. Method according to Claim 8, **characterized in that** the method comprises an air conditioning mode which consists in closing the first duct (27) and the second duct (25), opening the third duct (26) and the fourth duct (27), opening the first bypass device (17), closing the second bypass device (18), placing the mixing flap (31) in the closed position and switching off the pump (28).

13. Method according to the preceding claim, **characterized in that** after the air conditioning system (1) has been operated in air conditioning mode, the method comprises a period of time T during which operation of the air conditioning system (1) in the first heating mode is forbidden and during which operation of the air conditioning system (1) in the second heating mode is permitted.
